# FASCICULE DE BREVET EUROPEEN

(11) **EP 3 464 928 B1**
(45) Date de publication et mention de la délivrance du brevet: **19.08.2020**
(21) Numéro de dépôt: 17725673.2
(22) Date de dépôt: 27.04.2017
(51) Int. Cl.: F16F 1/36, B62D 25/08, B60K 11/04

(54) **FAÇADE DE REFROIDISSEMENT DE VÉHICULE**
FAHRZEUGKÜHLFRONTPLATTE
VEHICLE-COOLING FRONT PANEL

(30) Priorité: 24.05.2016 FR 1654624
(43) Date de publication de la demande: 10.04.2019
(73) Titulaire: PSA Automobiles SA, 78300 Poissy (FR)
(72) Inventeur: VIEIRA, Bruno, 78955 CARRIERES SOUS POISSY (FR); MARCAIS, Philippe, 78500 SARTROUVILLE (FR); MOIGNARD, Jeremy, 92390 VILLENEUVE LA GARENNE (FR)
(86) Numéro de dépôt international: PCT/FR2017/050996
(87) Numéro de publication internationale: WO 2017/203113

(56) Documents cités:
- WO-A1-2012/020185
- FR-A1- 2 864 817
- FR-A1- 2 963 759
- GB-A- 2 173 459
- US-A- 3 123 170
- US-A- 5 558 310

## Description

L'invention porte sur une façade de refroidissement comportant un plot de maintien et de filtration vibratoire d'un organe.

Le domaine technique correspond à l'interfaçage et à la filtration des organes présents dans une façade de refroidissement, par exemple un ou des radiateurs, un ou des échangeurs air/air, un condenseur et un groupe moto-ventilateur.

Les divers organes d'une façade de refroidissement sont supportés par des plots de maintien et de filtration vibratoire. Il existe plusieurs types de plots de maintien, par exemple des plots supérieurs et des plots inférieurs qui sont de conception différente, d'où la création de plusieurs références de pièces.

Par exemple, les systèmes d'interfaçage des plots de maintien qui assurent la solidarisation des plots de maintien avec l'organe associé de la façade de refroidissement peuvent être différents, notamment pour les plots de maintien supérieurs vis-à-vis des plots de maintien inférieurs.

En effet, un plot de maintien inférieur est destiné à permettre un réglage dans une direction tandis qu'un plot de maintien supérieur est destiné à permettre un réglage dans une direction perpendiculaire à celle d'un plot inférieur. Ceci est requis par exemple afin de permettre un accostage avec la traverse supérieure. Il s'ensuit que les systèmes d'interfaçage sont positionnés différemment sur le plot de maintien selon le type de plot de maintien.

De plus, le type de filtration que doit assurer les plots de maintien doit être différent selon l'organe associé de la façade de refroidissement. Par exemple, un refroidisseur d'air de suralimentation requiert une filtration spécifique différente de celle à assurer pour un ensemble comportant un radiateur associé à un groupe moto-ventilateur avec, le cas échéant, un condenseur.

Ceci nécessite une grande diversité de plots de maintien. Par exemple, pour un organe présent dans une façade de refroidissement, il est utilisé deux plots de maintien supérieurs, avantageusement identiques, deux plots de maintien inférieurs, avantageusement identiques, avec, le cas échéant, trois ou quatre plots de maintien pour un refroidisseur d'air de suralimentation, quand le moteur thermique du véhicule est un moteur turbocompressé. Cela requiert au moins trois types de plots différents, ce qui augmente le coût des pièces et les dépenses de développement et de stockage.

De plus, de telles façades de refroidissement sont avantageusement modulaires, c'est à dire que ces façades peuvent être adaptées par modification du nombre et du type de leurs organes qu'elles portent. Lors de la définition d'une nouvelle façade, des moyens de fixation et d'interfaçage sont redéfinis. Il faut alors tenir compte des nombreuses références de plots de maintien pour reconcevoir la nouvelle façade.

A ce jour, il y a deux sources de vibrations qui doivent être filtrées. La première source est le groupe moto-ventilateur solidarisé fréquemment avec un radiateur haute température (par exemple vers 110°C ou plus, pour des moteurs thermiques) et/ou basse température (par exemple entre 50 et 80 °C, pour des moteurs électriques) et, le cas échéant, un condenseur. Le groupe moto-ventilateur émet des vibrations avec une amplitude de l'ordre de 0,1 mm et de fréquence plutôt faible.

La deuxième source provient du refroidisseur d'air de suralimentation. Les vibrations issues du refroidisseur d'air de suralimentation sont liées aux pulsations d'un turbocompresseur. Les vibrations présentent une amplitude de l'ordre de 0,01mm et des fréquences plutôt élevées. Les efforts des vibrations de la deuxième source se font selon un axe perpendiculaire au plan des vibrations de la première source. Il résulte de ceci qu'un plot de maintien devant filtrer ces deux types de vibrations doit être efficace sélectivement dans deux directions orthogonales latérale et longitudinale au véhicule automobile puis dans une troisième perpendiculaire aux deux précédentes.

De plus, les plots avec leurs interfaçages ont aussi pour but de rattraper les jeux. Par exemple, sur un radiateur il peut y avoir un jeu de fabrication de l'ordre de +/-3mm qu'il faut pouvoir rattraper pour que les plots de maintien associés puissent être efficaces. Il est aussi nécessaire de pouvoir encaisser les dilations du faisceau du radiateur. A haute température, le faisceau a une expansion d'environ 3mm. Si un plot est fixé avec du jeu, il ne filtrera pas. Il faut alors que le plot de maintien soit pré-contraint.

Enfin, sur un radiateur, il faut aussi rattraper un jeu vertical. Mais étant donné que les systèmes d'accroche inférieure et supérieure sont différents, cela nécessite l'utilisation de plots de maintien différents.

Le document FR-A-2 944 769 décrit un plot de fixation pour radiateur qui présente une partie centrale comprenant un alésage adapté pour recevoir un pion d'un élément d'un véhicule automobile tel un radiateur. La partie centrale est liée à une partie périphérique par une liaison lui autorisant un déplacement élastique par rapport à cette partie périphérique, lui permettant ainsi de remplir une fonction de rattrapage de dispersion. La partie centrale peut comprendre une partie s'étendant sous un corps principal du plot de fixation, adapté pour une liaison avec une traverse de véhicule automobile. Le document GB2173459A montre aussi un plot de fixation.

Un tel plot ne peut pas convenir pour une utilisation en diverses positions par rapport à l'organe de refroidissement et ne permet pas d'être aisément adapté soit pour une filtration latérale et longitudinale au véhicule des vibrations du véhicule ou soit pour une filtration verticale.

Par conséquent, le problème à la base de l'invention est de concevoir un plot de maintien qui puisse présenter une majeure portion commune adéquate pour une utilisation du plot en divers emplacements de maintien d'un organe présent dans une façade de refroidissement de véhicule automobile.

Pour atteindre cet objectif, il est prévu selon l'invention un plot de maintien et de filtration vibratoire d'un organe présent dans une façade de refroidissement de véhicule, notamment de véhicule automobile, le plot présentant un dispositif de filtration en matériau déformable, tel que le dispositif de filtration en matériau déformable est entouré au moins partiellement par une cage en matériau non déformable, la cage portant un système d'interfaçage destiné à l'organe de la façade de refroidissement.

L'invention concerne la façade de refroidissement comportant cet organe et son ou ses plots associés de maintien et de filtration.

Selon un mode de réalisation non revendiqué, le plot est monobloc avec le dispositif de filtration en matériau déformable, l'ensemble monobloc étant en matériau déformable.

Selon un mode de réalisation alternatif non revendiqué, le plot n'est pas monobloc, est distinct de son dispositif de filtration.

L'effet technique est d'obtenir un plot de maintien avec un dispositif de filtration qui soit sensiblement le même quelque soit l'utilisation du plot de maintien en tant que plot de maintien d'un organe de la façade de refroidissement. Cela permet de ne créer qu'une mise au point d'un unique dispositif de filtration pour diverses utilisations du plot de maintien avec divers organes, ceci pour différents ensembles de façade de refroidissement.

Il est ainsi obtenu un plot de maintien adaptable à de nombreuses utilisations spécifiques. La portion spécifiquement dédiée à une utilisation est donc reportée uniquement sur une cage relativement rigide. Le système d'interfaçage peut être amovible de cette cage et placé à différents endroits de la cage. Il est alors possible de créer plusieurs systèmes d'interfaçage alternatifs, par exemple aussi bien pour un plot de maintien inférieur ou supérieur, ceci à partir de la même portion commune de filtration du plot de maintien.

Comme la filtration, d'une part, des refroidisseurs d'air de suralimentation et, d'autre part, de l'ensemble radiateur associé à un groupe moto-ventilateur et, le cas échéant, un condenseur est différente, la présente invention, en prévoyant le positionnement d'un système d'interfaçage soit axialement ou radialement au plot de maintien, permet d'utiliser un plot de maintien présentant une portion commune quelque soit son positionnement.

Ainsi, pour diverses structures de façade avant de véhicule automobile ou pour une nouvelle façade de refroidissement, selon l'invention, la diversité des plots de maintien de façade de refroidissement est limitée, avec une grande portion d'un plot de maintien commune pour un plot de maintien inférieur et supérieur pour le groupe moto-ventilateur ou pour le refroidisseur d'air de suralimentation. La spécificité du plot de maintien est reportée sur une diversité de cages en matériau non déformable qui viennent se fixer unitairement sur la portion commune du plot de maintien.

Selon l'invention, le dispositif de filtration présente au moins une première portion de réception d'une cage, cette première portion étant de forme cylindrique, la cage étant solidarisée autour de la première portion de réception cylindrique en l'entourant au moins partiellement. Pour limiter le coût de la mise au point du dispositif de filtration, avantageusement en caoutchouc, l'objectif de l'invention et de reporter une possible différentiation d'interfaçage sur une cage en matériau dur. Seule la cage est adaptée selon les conditions d'utilisation du plot de maintien. L'objectif d'une telle cage est de faire uniquement de la gestion d'interfaçage avec un organe de la façade de refroidissement et l'utilisation d'une telle cage a l'avantage de présenter une valeur ajoutée plus faible que de changer complètement un plot de maintien.

Avantageusement, la cage comporte au moins un élément d'encliquetage coopérant avec au moins un moyen complémentaire porté par le dispositif de filtration ou inversement.

Avantageusement, ledit au moins un moyen complémentaire porté par le dispositif de filtration est un logement dans lequel vient s'insérer ledit au moins un élément d'encliquetage porté par la cage ou inversement.

Avantageusement, le logement est disposé sur un épaulement faisant saillie dans un plan radial à la première portion de réception cylindrique du dispositif de filtration.

Selon l'invention, le dispositif de filtration présente au moins une deuxième portion de réception de cage, une cage étant sélectivement solidarisée autour de la première ou de la deuxième portion de réception.

Ainsi, la cage peut être amovible du dispositif de filtration et le système d'interfaçage peut être amovible de la cage. Cela accroît les facilités d'adaptation du plot de maintien à diverses utilisations et positionnements de tels plots sur la façade de refroidissement.

Pour gérer les interfaçages de la façade de refroidissement sur la structure, le principe de l'invention est de définir une portion commune de plot de maintien aussi bien supérieur qu'inférieur pour filtrer les vibrations émises par le groupe moto-ventilateur et le refroidisseur d'air de suralimentation. La spécificité de plot inférieur, supérieur ou de refroidisseur d'air de suralimentation est obtenue par la possibilité de créer deux ou trois positions possibles sur le plot pour une cage sélectionnée parmi des cages d'interfaçage différentes, par exemple une position de cage inférieure et une position de cage supérieure.

Dans une forme de configuration du système d'interfaçage, le système d'interfaçage destiné à l'organe de la façade de refroidissement s'étend sur une partie de la cage en étant porté par la cage radialement ou axialement à la première portion de réception présentée par le dispositif de filtration.

Etant donné que les sources à filtrer peuvent être dans des plans différents comme par exemple, d'une part, pour le groupe moto-ventilateur et, d'autre part, pour le refroidisseur d'air de suralimentation, la présente invention permet de créer une filtration des vibrations du plot de maintien par positionnement du plot de maintien dans le sens des vibrations pour une filtration optimale.

Dans une autre forme de configuration du système d'interfaçage, le système d'interfaçage destiné à l'organe de la façade de refroidissement entoure la cage, le système d'interfaçage comportant au moins un élément d'encliquetage coopérant avec au moins un moyen complémentaire porté par la cage.

Avantageusement, le dispositif de filtration est en caoutchouc ou en matériau similaire et la cage est en plastique dur. Il y aura des diversités de cage plastique pour permettre de réaliser les différents systèmes d'interfaçage.

L'invention concerne enfin une façade de refroidissement de véhicule, selon la revendication indépendante 1.

La présente invention décompose le plot de maintien en deux parties, c'est-à-dire une portion commune de plot de maintien utilisable pour différents types de plots inférieurs, supérieurs, à filtration radiale ou axiale au plot de maintien et une cage en matériau dure spécialisant la portion commune de plot de maintien à une utilisation spécifique du plot de maintien. Cette décomposition permet une grande capacité d'adaptation des plots sur des façades de refroidissement. De plus, cela libère la conception de nouvelles façades de refroidissement qui n'est plus entravée par des problèmes de maintien et de filtration de divers organes présents sur ces façades de refroidissement.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique en perspective d'un premier mode de réalisation d'un plot de maintien et de filtration vibratoire selon la présente invention pour un organe présent dans une façade de refroidissement de véhicule automobile, le plot présentant un dispositif de filtration en matériau déformable entouré au moins partiellement par une cage en matériau non déformable, la cage portant un système d'interfaçage destiné à l'organe,
- la figure 2 est une représentation schématique en perspective d'un plot de maintien similaire à celui montré à la figure 1 à la différence que le système d'interfaçage est disposé radialement au plot et non axialement comme à la figure 1,
- la figure 3 est une représentation schématique en perspective d'un dispositif de filtration en matériau déformable faisant partie d'un plot selon le premier mode de la présente invention,
- les figures 4 et 5 montrent respectivement une vue de dessus d'un plot de maintien selon un deuxième mode de réalisation, ceci dans une position de filtration différente pour chacune des figures,
- la figure 6 est une représentation schématique en perspective d'un plot de maintien similaire à celui montré aux figures 4 et 5,
- les figures 7 et 8 sont des représentations schématiques respectivement en perspective et en coupe d'un plot de maintien conforme à un troisième mode de réalisation de la présente invention,
- les figures 9 et 10 sont des représentations schématiques respectivement en perspective et en coupe d'un plot de maintien conforme à un quatrième mode de réalisation de la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant à toutes les figures, la présente invention concerne un plot de maintien 1 et de filtration vibratoire d'un organe présent dans une façade de refroidissement de véhicule automobile. Cette façade de refroidissement est avantageusement modulaire, c'est-à-dire que la succession et le type d'organes présents dans la façade de refroidissement peuvent être aisément modifiés.

L'ensemble de refroidissement peut, par exemple, sans que cela soit limitatif intégrer trois fonctions principales de refroidissement, à savoir le refroidissement d'un moteur thermique présent dans le véhicule automobile, le refroidissement des gaz de suralimentation quand le moteur thermique est un moteur turbocompressé et le refroidissement du fluide réfrigérant d'une boucle de refroidissement de la climatisation, et le refroidissement des batteries et machines électriques. On peut aussi envisager de procéder au refroidissement d'une boîte de vitesses ou d'un embrayage.

Dans le cas des trois fonctions principales de refroidissement précédemment mentionnées, il peut y avoir trois échangeurs de chaleur distincts dont un pour chacune de ces fonctions de refroidissement. Un radiateur haute température peut refroidir un fluide caloporteur circulant dans un système de refroidissement du moteur thermique, ce radiateur étant associé à un groupe moto-ventilateur.

Un radiateur basse température peut refroidir un fluide de refroidissement ayant été en échange de chaleur avec l'air de suralimentation ou en alternative un échangeur air/air intégré dans l'ensemble de refroidissement peut refroidir l'air de suralimentation.

Un condenseur peut condenser le fluide réfrigérant de la climatisation, ce fluide réfrigérant étant refroidi par la circulation d'air aux environs de la façade. En alternative avec cette dernière possibilité, un radiateur basse température peut refroidir un fluide de refroidissement ayant été en échange de chaleur avec le fluide réfrigérant de la climatisation.

Il est connu de fixer directement un ou plusieurs organes de refroidissement ou un organe remplissant la fonction de groupe moto-ventilateur de la façade de refroidissement au châssis. Pour chacun des organes de refroidissement ou pour un groupe d'organes de refroidissement comme un radiateur associé à un groupe moto-ventilateur, il est prévu des éléments de découplage vibratoires intercalés entre, d'une part, l'organe de refroidissement ou le groupe et, d'autre part, le cadre ou le châssis.

Ces éléments de découplage vibratoire sont aptes à filtrer des vibrations, notamment par mise en œuvre d'une masse en matériau déformable. Dans tous les cas, il s'ensuit que de nombreux éléments de découplage vibratoires pour tous les organes de refroidissement ou groupe d'organes sont nécessaires.

Ces éléments de découplage vibratoire forment chacun un plot de maintien 1 et de filtration vibratoire de l'organe associé de la façade de refroidissement, chaque organe associé présentant plusieurs plots 1.

Chaque plot de maintien 1 et de filtration vibratoire présente un dispositif de filtration 2 en matériau déformable. Selon la présente invention, ce dispositif de filtration 2 en matériau déformable est entouré au moins partiellement par une cage 3 en matériau non déformable. Pour ce faire, la cage 3 porte un système d'interfaçage 4 destiné à l'organe associé de la façade de refroidissement.

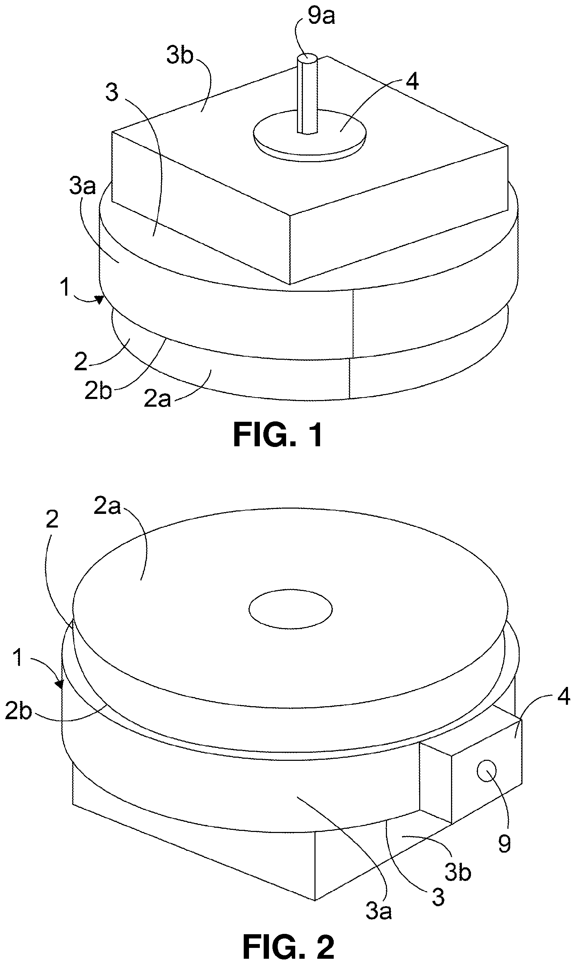

Aux figures 1 et 2, dans un premier mode de réalisation du plot de maintien 1 selon la présente invention, la cage 3 peut présenter une portion cylindrique et une portion rectangulaire, ce qui n'est pas limitatif. Le système d'interfaçage 4 peut être disposé axialement au plot de maintien 1, comme à la figure 1 ou radialement, comme à la figure 2, ceci selon le type d'organe de la façade de refroidissement à supporter.

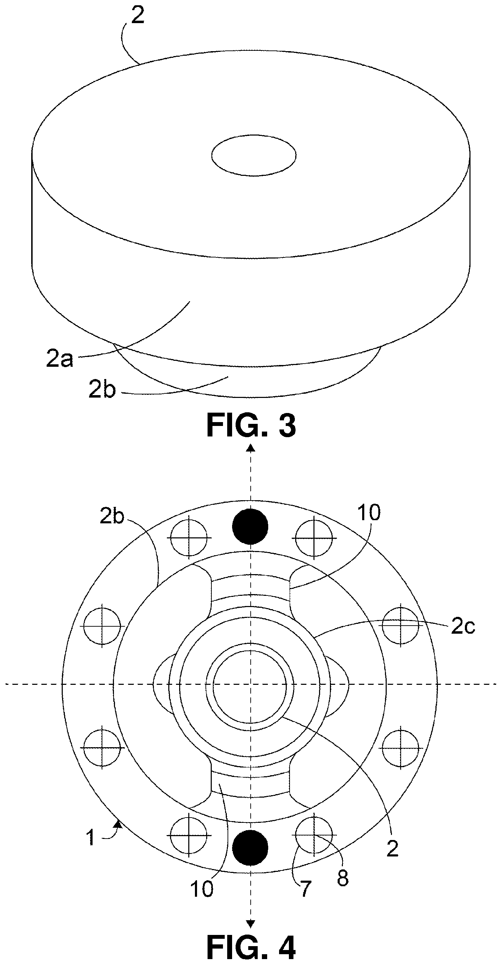

Aux figures 4 à 6 et 7 à 8, respectivement dans un deuxième et un troisième modes de réalisation du plot de maintien 1 selon la présente invention, le dispositif de filtration 2 en matériau déformable présente une première portion cylindrique périphérique 2b entourant à distance une deuxième portion cylindrique médiane 2c. Les première et deuxième portions cylindriques 2b, 2c sont solidarisés ensemble par des bras 10 s'étendant radialement aux portions cylindriques 2b, 2c. C'est la première portion cylindrique périphérique 2b qui est entourée par la cage 3.

La figure 4 illustre un plot de maintien 1 devant filtrer des vibrations issues d'un groupe moto-ventilateur. L'orientation du plot de maintien 1 selon la flèche dessinée à la figure 4 et reliant les deux points indiqués en noir permet un filtrage des vibrations du groupe moto-ventilateur. Les bras 10 reliant la première portion cylindrique périphérique 2b à la deuxième portion cylindrique médiane 2c s'étendent radialement selon la flèche de la figure 4.

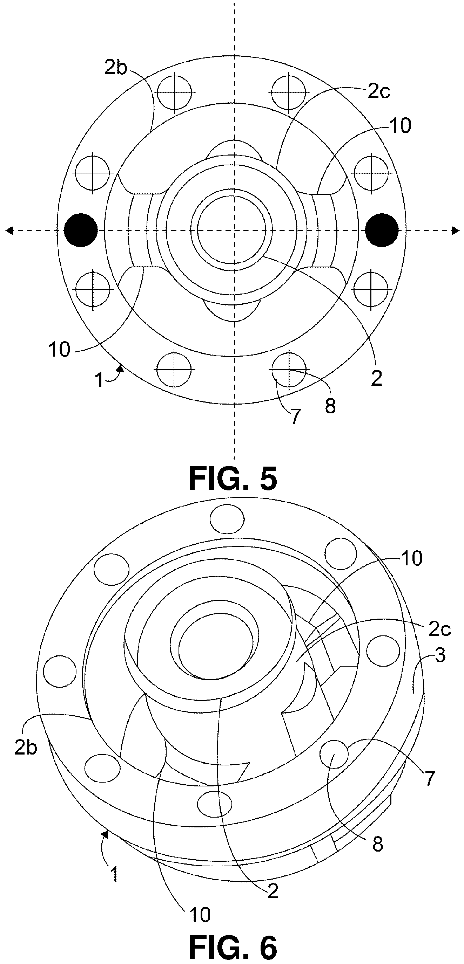

La figure 5 illustre un plot de maintien 1 devant filtrer des vibrations issues d'un refroidisseur d'air de suralimentation. Le plot de maintien 1 de la figure 4 est tourné de 90° tout en gardant la même configuration avec une flèche reliant les deux points indiqués en noir et les bras 10 reliant la première portion cylindrique périphérique 2b à la deuxième portion cylindrique médiane 2c s'étendant radialement selon la flèche de la figure 5.

Il peut être prévu de précontraindre le plot de maintien 1 avec une précharge axiale ou une précharge radiale. Le tableau suivant donne des valeurs de précharges axiales ou raidiales selon le sens de filtration qui peut être axial ou radial, ce dernier pouvant être dans une direction spécifique de deux directions perpendiculaires comme montré aux figures 4 et 5.

A ce tableau « application RAS EMP1 » fait référence à une application à un refroidisseur d'air de suralimentation et « application GMV EMP1 » est relative à une application à un groupe moto-ventilateur. 25Hz est la fréquence des vibrations et les valeurs de raideur sont données en Newton par millimètre ou N/mm sont données avec une erreur de +/- 20%.

| | PRECHARGE AXIALE | PRECHARGE RADIALE | VALEURS ±20%. À 25 Hz SOUS EXCITATION ±0.1.mm APPLICATION RAS EMP1) | VALEURS ±20%, À 25 Hz SOUS EXCITATION ±0.01mm (APPLICATION GMV EMP1) |
|---|---|---|---|---|
| SENS AXIAL | SANS | SANS | 46.8 N/mm | 61.8 N/mm |
| SENS RADIAL 1 | 1 mm | | 185.2 N/mm | 244.2 N/mm |
| SENS RADIAL 2 | | | 42.9 N/mm | 56.6 N/mm |

Le sens radial 1 avec une raideur autour de 200 N/mm est approprié pour une filtration des vibrations issues d'un refroidisseur d'air de suralimentation. Le sens radial 2 ou axial avec une raideur autour de 50 N/mm est approprié pour une filtration des vibrations issues d'un groupe moto-ventilateur.

Aux figures 4 à 6, dans le deuxième mode de réalisation du plot de maintien 1 selon la présente invention, la cage 3 peut présenter des évidements 7 dans lesquels pénètrent un élément d'indexage 8 respectif porté par le dispositif de filtration 2 en matériau déformable, ou inversement. Ces évidements permettent une meilleure compression, une compression moins rigide.

Aux 7 à 8, dans le troisième mode de réalisation du plot de maintien 1 selon la présente invention, la cage 3 peut présenter également des évidements 7 mais qui ne participent pas à l'indexage : ici, on vient surmouler le dispositif de filtration 2 à la cage 3 par surmoulage, et ces évidements permettent de faciliter l'adhérisation des deux composants. Ils restent optionnels, et peuvent notamment être remplacés par des stries par exemple.

Le dispositif de filtration 2 peut être en caoutchouc ou en matériau déformable similaire, avantageusement un matériau élastomère. La cage 3 peut être en plastique dur en tant que matériau non déformable.

Le dispositif de filtration 2 peut présenter au moins une première portion de réception 2b d'une cage 3. Cette première portion 2b peut être de forme cylindrique, la cage 3 étant solidarisée autour de la première portion de réception 2b cylindrique en l'entourant au moins partiellement. La différence entre, d'une part, le premier mode et, d'autre part, les deuxième et troisième modes de réalisation de l'invention est que dans ces deux derniers modes la première portion de réception 2b cylindrique est creuse en étant reliée par au moins deux bras 10 s'étendant radialement à une deuxième portion cylindrique médiane au plot de maintien 1. En effet, dans ces deux modes de réalisation, la première portion de réception 2b cylindrique est la première portion cylindrique périphérique précédemment décrite.

Le mode de réalisation décrit utilise deux bras. Alternativement, on peut prévoir un nombre de bras supérieur, notamment en nombre pair, par exemple quatre bras. Les bras peuvent être tous dimensionnés de la même manière ou être dimensionnés différemment les uns des autres, ou l'un de l'autre quand il y a deux bras.

Les bras contribuent à faire travailler le plot dans une direction, avec une plus grande souplesse dans l'autre direction. On peut prévoir des évidements partiels ou complets de la portion de réception 2b cylindrique.

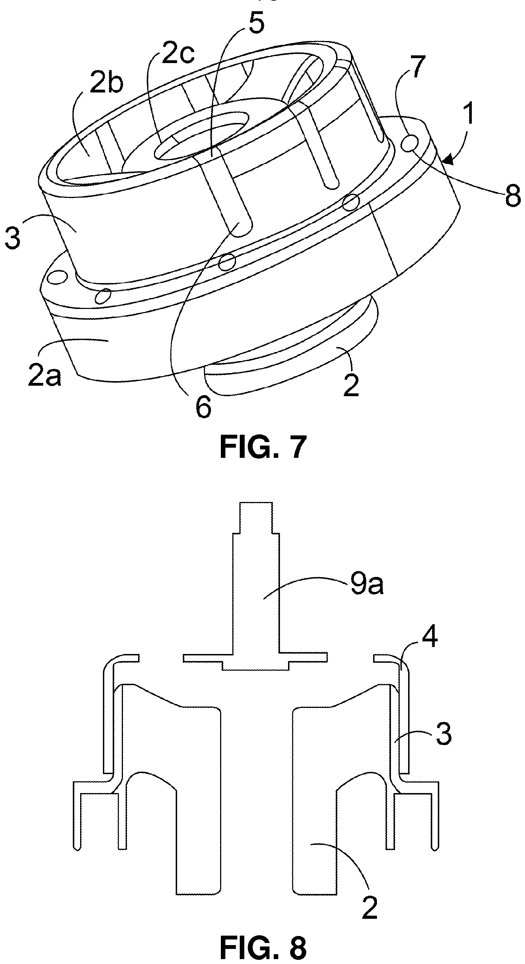

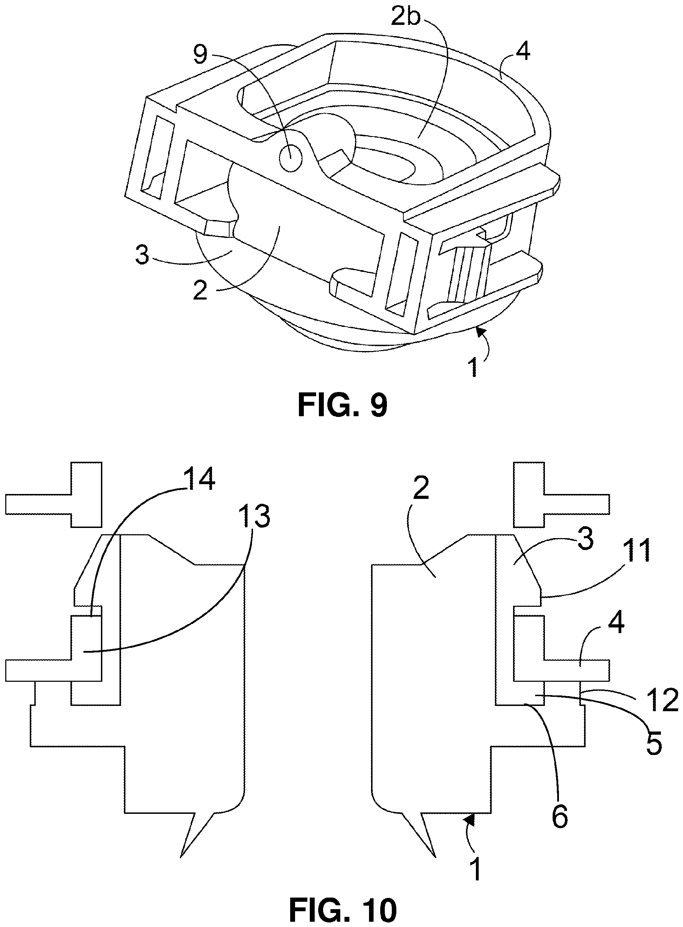

La cage 3 peut comporter au moins un élément d'encliquetage 5 coopérant avec au moins un moyen complémentaire 6 porté par le dispositif de filtration 2. Par exemple à la figure 7, il est montré un logement 6 porté par la cage 3 dans lequel pénètre respectivement un élément d'encliquetage 5 porté par le dispositif de filtration 2. Inversement, dans un autre mode de réalisation montré à la figure 10, un logement 6 porté par le dispositif de filtration 2 reçoit un élément d'encliquetage 5 porté par la cage 3.

Ainsi, ledit au moins un moyen complémentaire 6 porté par le dispositif de filtration 2 peut être un logement 6 dans lequel vient s'insérer ledit au moins un élément d'encliquetage 5 porté par la cage 3 ou inversement.

Comme il est visible à la figure 10, pour le quatrième mode de réalisation d'un plot de maintien 1 selon la présente invention, le logement 6 alors porté par le dispositif de filtration 2 peut être disposé sur un épaulement 12 faisant saillie dans un plan radial à la première portion de réception 2b cylindrique du dispositif de filtration 2.

Le dispositif de filtration 2 selon l'invention présente au moins une deuxième portion de réception de cage 3, une cage 3 étant sélectivement solidarisée autour de la première ou, le cas échéant, de la deuxième portion de réception. Ceci permet d'inverser le plot 1 et de garder un même dispositif de filtration 2 pour un plot de maintien 1 inférieur ou supérieur pour un organe de façade de refroidissement. Cette deuxième portion de réception n'est pas référencée figures.

Ainsi, comme il est montré respectivement aux figures 1 et 2, le système d'interfaçage 4 destiné à l'organe de la façade de refroidissement peut s'étendre sur une partie de la cage 3 en étant porté par la cage 3 radialement ou axialement à la première portion de réception 2b présentée par le dispositif de filtration 2. La figure 9 montre aussi un système d'interfaçage 4 radial au dispositif de filtration 2 et à sa première portion de réception 2b cylindrique.

Aux figures 1 et 2, le système d'interfaçage 4 s'étend sur une partie peu importante de la cage 3 en étant donc localement positionné sur la cage 3. Dans une autre configuration du système d'interfaçage 4, le système d'interfaçage 4 destiné à l'organe de la façade de refroidissement peut entourer plus ou moins complètement la cage 3. Le système d'interfaçage 4 comporte au moins un élément d'encliquetage 13 coopérant avec au moins un moyen complémentaire 14 porté par la cage 3.

Un tel élément d'encliquetage 13 porté par le système d'interfaçage 4 est montré à la figure 10. Il peut pénétrer dans un logement 14 que porte la cage 3 en tant que moyen complémentaire porté par la cage 3. D'autres configurations d'encliquetage sont aussi possibles.

Selon un mode de réalisation, l'invention concerne enfin une façade de refroidissement de véhicule automobile présentant au moins un organe de refroidissement portant au moins un pion. Ledit au moins un organe de refroidissement est supporté par au moins un tel plot 1. Le système d'interfaçage 4 dudit au moins un plot 1 présente au moins un alésage 9 destiné à recevoir au moins un pion porté par ledit au moins un organe. Le pion est ici une vis en matériau tendre. En alternative, ledit au moins un système d'interfaçage 4 dudit au moins un plot 1 porte au moins un pion 9a reçu dans un alésage dudit au moins un organe présent dans la façade de refroidissement de véhicule automobile.

Un système d'interfaçage 4 muni d'un alésage 9 est montré aux figures 2 et 9. Pour l'autre alternative, un système d'interfaçage 4 muni d'un pion 9a est montré aux figures 1 et 8.

L'invention n'est nullement limitée aux modes de réalisation décrits et illustrés qui n'ont été donnés qu'à titre d'exemples.

## Revendications

1. Façade de refroidissement de véhicule, notamment automobile, présentant un organe associé à au moins un plot de maintien (1) et de filtration vibratoire dudit organe, le plot (1) présentant un dispositif de filtration (2) en matériau déformable, qui est entouré au moins partiellement par une cage (3) en matériau non déformable, la cage (3) portant un système d'interfaçage (4) avec ledit organe de la façade de refroidissement, le dispositif de filtration (2) présentant au moins une première portion de réception (2b) de la cage (3), cette première portion (2b) étant de forme cylindrique, **caractérisé en ce que** le dispositif de filtration (2) présente au moins une deuxième portion de réception de la cage (3), la cage (3) étant sélectivement solidarisée autour de la première (2b) portion de réception (2b) cylindrique en l'entourant au moins partiellement ou de la deuxième portion de réception.

2. Façade de refroidissement selon la revendication 1, dans lequel la cage (3) comporte au moins un élément d'encliquetage (5) coopérant avec au moins un moyen complémentaire (6) porté par le dispositif de filtration (2) ou inversement.

3. Façade de refroidissement selon la revendication 2, dans lequel ledit au moins un moyen complémentaire porté par le dispositif de filtration (2) est un logement (6) dans lequel vient s'insérer ledit au moins un élément d'encliquetage (5) porté par la cage (3) ou inversement.

4. Façade de refroidissement selon la revendication 3, dans lequel le logement (6) est disposé sur un épaulement (12) faisant saillie dans un plan radial à la première portion de réception (2b) cylindrique du dispositif de filtration (2).

5. Façade de refroidissement selon l'une quelconque des revendications 1 à 4, dans lequel le système d'interfaçage (4) destiné à l'organe de la façade de refroidissement s'étend sur une partie de la cage (3) en étant porté par la cage (3) radialement ou axialement à la première portion de réception (2b) du dispositif de filtration (2).

6. Façade de refroidissement selon l'une quelconque des revendications 1 à 4, dans lequel le système d'interfaçage (4) destiné à l'organe de la façade de refroidissement entoure la cage (3), le système d'interfaçage (4) comportant au moins un élément d'encliquetage (13) coopérant avec au moins un moyen complémentaire (14) porté par la cage (3).

7. Façade de refroidissement selon l'une quelconque des revendications précédentes, dans lequel le dispositif de filtration (2) est en caoutchouc ou en matériau similaire et la cage (3) est en plastique dur.

8. Façade de refroidissement selon l'une des revendications précédentes, **caractérisée en ce que** ledit système d'interfaçage (4) dudit au moins un plot (1) présente au moins un alésage (9) destiné à recevoir au moins un pion (9a) porté par ledit au moins un organe ou ledit au moins un système d'interfaçage (4) dudit au moins un plot (1) portant au moins un pion (9a) reçu dans un alésage dudit au moins un organe présent dans la façade de refroidissement de véhicule automobile.

## Patentansprüche

1. Vordere Kühlplatte für Fahrzeuge, insbesondere Kraftfahrzeuge, umfassend ein Organ, das mit mindestens einem Zapfen (1) zum Halten und zur Vibrationsfilterung des besagten Organs verbunden ist, wobei der Zapfen (1) eine Filtervorrichtung (2) aus verformbarem Material umfasst, die zumindest teilweise von einem Käfig (3) aus nicht verformbarem Material umgeben ist, wobei der Käfig (3) ein Verbindungssystem (4) mit dem besagten Organ der vorderen Kühlplatte trägt, wobei die Filtervorrichtung (2) mindestens einen ersten Abschnitt (2b) zur Aufnahme des Käfigs (3) aufweist, wobei dieser erste Abschnitt (2b) eine zylindrische Form hat, **dadurch gekennzeichnet, dass** die Filtervorrichtung (2) mindestens einen zweiten Abschnitt zur Aufnahme des Käfigs (3) aufweist, wobei der Käfig (3) selektiv um den ersten zylindrischen Aufnahmeabschnitt (2b) herum befestigt ist, indem er ihn zumindest teilweise oder um den zweiten Aufnahmeabschnitt herum umgibt.

2. Kühlungsfrontplatte nach Anspruch 1, bei der der Käfig (3) mindestens ein Einrastelement (5) aufweist, das mit mindestens einem komplementären Mittel (6) zusammenwirkt, das von der Filtervorrichtung (2) getragen wird oder umgekehrt.

3. Kühlfront nach Anspruch 2, wobei das mindestens eine komplementäre Mittel, das von der Filtervorrichtung (2) getragen wird, ein Gehäuse (6) ist, in das das mindestens ein Einrastelement (5), das von dem Käfig (3) getragen wird, eingesetzt wird oder umgekehrt.

4. Kühlfront nach Anspruch 3, wobei das Gehäuse (6) auf einer Schulter (12) angeordnet ist, die in einer radialen Ebene am ersten zylindrischen Aufnahmeabschnitt (2b) der Filtervorrichtung (2) vorsteht.

5. Kühlfassade nach einem der Ansprüche 1 bis 4, wobei sich das Schnittstellensystem (4) für das Kühlfassadenelement über einen Teil des Käfigs (3) erstreckt, indem es von dem Käfig (3) radial oder axial bis zum ersten Aufnahmeabschnitt (2b) der Filtervorrichtung (2) getragen wird.

6. Kühlfassade nach einem der Ansprüche 1 bis 4, wobei das Schnittstellensystem (4) für das Kühlfassadenelement den Käfig (3) umgibt, wobei das Schnittstellensystem (4) mindestens ein Einrastelement (13) aufweist, das mit mindestens einem komplementären Mittel (14) zusammenwirkt, das von dem Käfig (3) getragen wird.

7. Kühlfront nach einem der vorstehenden Ansprüche, wobei die Filtervorrichtung (2) aus Gummi oder ähnlichem Material und der Käfig (3) aus hartem Kunststoff hergestellt ist.

8. Kühlfassade nach einem der vorhergehenden Ansprüche, **dadurch gekennzeichnet, dass** das genannte Schnittstellensystem (4) des genannten mindestens einen Stollens (1) mindestens eine Bohrung (9) aufweist, die dazu bestimmt ist, mindestens einen Stift (9a) aufzunehmen, der von dem genannten mindestens einen Element oder dem genannten mindestens einen Schnittstellensystem (4) des genannten mindestens einen Stollens (1) getragen wird, das mindestens einen Stift (9a) trägt, der in einer Bohrung des genannten mindestens einen Elements aufgenommen wird, das in der Kühlfassade eines Kraftfahrzeugs vorhanden ist.

## Claims

1. Cooling front panel for a vehicle, in particular a motor vehicle, having a member associated with at least one stud (1) for holding and vibratory filtration of the said member, the stud (1) having a filtration device (2) made of deformable material, which is surrounded at least partially by a cage (3) made of non-deformable material, the cage (3) carrying an interfacing system (4) with the said member of the cooling front panel, the filtration device (2) having at least one first portion (2b) for receiving the cage (3), this first portion (2b) being cylindrical in shape, **characterized in that** the filtration device (2) has at least one second portion for receiving the cage (3), the cage (3) being selectively secured around the first cylindrical receiving portion (2b) by surrounding it at least partially or around the second receiving portion.

2. Cooling front panel according to claim 1, in which the cage (3) comprises at least one snap-in element (5) cooperating with at least one complementary means (6) carried by the filtration device (2) or vice versa.

3. Cooling front according to claim 2, wherein said at least one complementary means carried by the filtration device (2) is a housing (6) into which is inserted said at least one snap-in element (5) carried by the cage (3) or vice versa.

4. A cooling front according to claim 3, wherein the housing (6) is arranged on a shoulder (12) projecting in a radial plane at the first cylindrical receiving portion (2b) of the filter device (2).

5. Cooling facade according to any one of claims 1 to 4, wherein the interface system (4) for the cooling facade member extends over part of the cage (3) by being carried by the cage (3) radially or axially to the first receiving portion (2b) of the filter device (2).

6. Cooling facade according to any one of claims 1 to 4, wherein the interface system (4) for the cooling facade member surrounds the cage (3), the interface system (4) comprising at least one snap-in element (13) cooperating with at least one complementary means (14) carried by the cage (3).

7. A cooling front according to any of the preceding claims, wherein the filter device (2) is made of rubber or similar material and the cage (3) is made of hard plastic.

8. Cooling facade according to one of the preceding claims, **characterised in that** said interfacing system (4) of said at least one stud (1) has at least one bore (9) intended to receive at least one pin (9a) carried by said at least one member or said at least one interfacing system (4) of said at least one stud (1) carrying at least one pin (9a) received in a bore of said at least one member present in the cooling facade of a motor vehicle.
